# DEMANDE DE BREVET EUROPEEN

(11) **EP 1 722 307 A1**
(43) Date de publication de la demande: **15.11.2006**
(21) Numéro de dépôt: 05103829.7
(22) Date de dépôt: 09.05.2005
(51) Int. Cl.: G06F 17/30

(54) **Méthode dynamique de génération de documents XML à partir d'une base de données**

(71) Demandeur: Amadeus s.a.s, 06410 Biot (FR)
(72) Inventeur: Molenaar, Rick, c/o Cabinet Hautier, 06000 Nice (FR)
(74) Mandataire: Decobert, Jean-Pascal

(57) **Abrégé**

Une méthode pour générer automatiquement des documents XML incluant des données extraites d'une base de données source est décrite. La méthode consiste à définir une pluralité de gabarits, dans le format de la base de données, lesquels incluent des instructions exécutables. Des requêtes, associées à chacun des gabarits, sont également définies. Les requêtes sont utilisées pour extraire des données de la base de données source sous la forme de jeux d'enregistrements. L'exécution des instructions des gabarits génère au moins un document XML qui inclut les données provenant des jeux d'enregistrements. A l'aide d'une instruction d'appel un gabarit peut appeler n'importe lequel des autres gabarits pour produire un document XML.

Le méthode de l'invention réalise une définition dynamique d'accès aux données de la base de données à l'aide de gabarits imbriqués opérant directement depuis la base de données.

## Description

### DOMAINE TECHNIQUE DE L'INVENTION

La présente invention concerne d'une façon générale les bases de données gérées par ordinateurs et a trait plus particulièrement à la génération automatique de documents, du type utilisant le langage de balisage XML « eXtensible Markup Language », quand on interroge ces bases de données.

### ÉTAT DE LA TECHNIQUE

Des bases de données gérées depuis des ordinateurs directement, ou à travers un réseau, sont utilisées depuis très longtemps par de nombreuses entreprises, des administrations et toutes sortes d'organismes à vocation commerciale ou autre. Les bases de données sont des entités dans lesquelles il est possible de stocker des données de façon structurée et avec le moins de redondance possible. L'avantage majeur de l'utilisation de bases de données est alors la possibilité de pouvoir être accédées par de nombreux utilisateurs simultanément.

A titre d'exemple, il existe des bases de données regroupant l'ensemble des horaires et l'état des réservations des vols de toutes les compagnies aériennes dans le monde ou les offres des chaînes hôtelières internationales. Les agences de voyage peuvent alors accéder à ces informations de n'importe où dans le monde et en particulier depuis que l'Internet permet l'interconnexion de tous les réseaux privés ou publics. Ainsi, la notion de base de données est généralement couplée à celle de réseau afin de pouvoir mettre en commun et partager ces informations.

Pour contrôler les données, ainsi que les utilisateurs, un système de gestion de bases de données (SGBD) est nécessaire. Le SGBD est un ensemble d'applications logicielles permettant de gérer les bases de données, c'est-à-dire de permettre l'accès aux données de façon simple, d'autoriser un accès aux informations à de multiples utilisateurs et de manipuler les données présentes dans la base de données (insertion, suppression, modification).

Les bases de données sont le plus souvent construites selon un modèle dit relationnel qui organise les données sous forme de tables. La manipulation des données se fait selon le concept mathématique de relation de la théorie des ensembles, c'est-à-dire l'algèbre relationnelle qui est constituée d'un ensemble d'opérations formelles sur les relations. Les opérations relationnelles permettent de créer une nouvelle relation (table) à partir d'opérations élémentaires sur d'autres tables (par exemple l'union, l'intersection, ou encore la différence).

Un langage structuré de requêtes a aussi été largement adopté. Connu sous l'abréviation SQL, de l'anglais « Structured Query Language », il est tout à la fois un langage de définition de données et un langage de manipulation et de contrôle de données. La définition de données est l'oeuvre de l'administrateur. La plupart de ceux qui utilisent le langage SQL ne se servent que du langage de manipulation de données, permettant de sélectionner les données qui les intéressent. Du point de l'utilisateur la principale commande du langage de manipulation de données est la commande SELECT. Basée sur l'algèbre relationnelle elle permet d'effectuer des opérations de sélection de données sur plusieurs tables relationnelles pour les mettre à disposition d'un utilisateur.

Avec le formidable développement de l'Internet, et l'interconnexion des réseaux publics et privés qu'il a permise, la standardisation de l'échange des données s'est faite à travers l'adoption d'un protocole dit HTTP, abréviation de l'anglais « Hyper Text Transfer Protocol » et le développement d'un système de communication connu sous le nom de Web, de l'anglais « World Wide Web » ou toile mondiale. La toile mondiale permet la recherche d'information, l'accès à cette information et sa visualisation en utilisant l'hypertexte ou HTML de l'anglais « Hyper Text Markup Language ». Langage de balisage de texte, il permet la création de documents hypertextes affichables par un navigateur Web.

Le langage HTML est une version particulière, très dépouillée, d'un standard beaucoup plus sophistiqué adopté dans les années 80 pour décrire des documents et leur formatage et connu sous l'abréviation SGML, de l'anglais « Standard Generalized Markup Language ». Le langage SGML est un langage symbolique qui est toujours utilisé pour décrire la structure logique d'un document, et non son aspect typographique. Le principe appliqué est le marquage générique, à l'aide de balises, des chapitres, paragraphes, préface, introduction et autres entités d'un document. Si la simplicité du langage HTML a contribué largement à son adoption, et était tout à fait satisfaisante au début du développement du Web, une demande pour des applications plus exigeantes a démontré rapidement ses limites. La simplicité du HTML ayant été obtenue au prix d'une absence d'évolutivité le besoin s'est fait rapidement sentir d'un langage qui offrirait des possibilités d'évolution et d'adaptation similaires au standard duquel HTML était dérivé, c'est-à-dire SGML, en évitant toutefois la complexité de ce dernier. La réponse a été un nouveau standard proposé à la fin de 1996 par l'organisme chargé de normaliser le Web et connu sous l'appellation XML, abréviation de l'anglais « eXtensible Markup Language » c'est-à-dire langage à balises étendu. Comme SGML, sans en avoir la complexité, XML est un métalangage qui permet d'étendre le langage HTML. Notamment, il permet de définir de nouvelles balises par exemple, pour mieux décrire la présentation d'un texte et pouvoir personnaliser complètement des documents. Le succès de XML réside dans sa capacité à pouvoir décrire n'importe quel domaine de données grâce à son extensibilité. Il permet de structurer, poser le vocabulaire et la syntaxe des données qu'il va contenir.

Il n'est donc pas surprenant que le langage XML ait été utilisé depuis sa création pour mettre en forme des documents comprenant des données issues de bases de données, en particulier de bases de données relationnelles décrites ci-dessus. Données obtenues à l'aide de requêtes SQL.

L'utilisation des données obtenues et leur inclusion dans des documents en vue de leur affichage dans une fenêtre ouverte par le navigateur Web d'un utilisateur peuvent cependant demander un effort de codage important. Dans l'exemple déjà cité ci-dessus de bases de données interrogées par des agences de voyage, les utilisateurs, le niveau de personnalisation souhaité de l'affichage peut être très grand. En effet, les clients de ces agences de voyage ont des motivations très variées. S'ils sont des vacanciers ou des hommes ou femmes d'affaire la sélection des données et leur présentation pourra être très différente afin de faciliter le travail du personnel de ces agences, d'augmenter leur productivité et de mieux satisfaire leurs clients.

La génération automatique de documents XML a donc reçu une attention particulière de la part des développeurs de ces applications. On pourra par exemple se référer à un brevet délivré par l'office américain des brevets (USPTO) sous le numéro US 6,636,845 qui décrit une méthode de génération de documents XML à partir d'une seule requête SQL « Generating one or more XML documents from a single SQL query ». Cependant la méthode décrite manque de souplesse. En particulier il y est fait appel à une définition statique pour décrire l'accès aux données. Il y a donc autant de définitions que de types de données à accéder dans les documents XML correspondants.

### OBJET DE L'INVENTION

L'objet général de l'invention est de proposer une méthode améliorée pour générer des documents XML à partir d'une base de données.

C'est en particulier un objet de l'invention que de pouvoir générer un document XML à partir d'une définition dynamique d'accès aux données de la base de données.

C'est un autre objet de l'invention que d'obtenir cette définition dynamique à partir de l'utilisation d'une combinaison de gabarits imbriqués décrits dans le format de la base de données.

C'est aussi un objet de l'invention que de simplifier et de réduire le nombre de documents XML à générer pour une application tout en maintenant un degré élevé de personnalisation.

Les autres objets, caractéristiques et avantages de la présente invention apparaîtront aux spécialistes à l'examen de la description suivante et des dessins d'accompagnement. Il est entendu que d'autres avantages peuvent être incorporés.

### RÉSUMÉ DE L'INVENTION

Une méthode pour générer automatiquement au moins un document XML incluant des données extraites d'une base de données source est décrite. La méthode consiste à définir une pluralité de gabarits, dans le format de la base de données, lesquels gabarits incluent des instructions exécutables. Des requêtes associées à chacun des gabarits sont aussi définies. Les requêtes sont utilisées pour extraire des données de la base de données source sous la forme de jeux d'enregistrements. Les instructions des gabarits sont exécutées afin de générer au moins un document XML lequel inclut les données provenant des jeux d'enregistrements. Les instructions incluent au moins une instruction d'appel à n'importe lequel des autres gabarits. Les documents XML sont composés d'éléments, lesquels éléments comprennent des attributs. La méthode est caractérisée en ce qu'elle maintient une notion d'élément courant. La méthode inclut aussi une instruction pour créer un nouvel élément lequel est attribué à l'élément courant. Le nouvel élément devient alors à son tour l'élément courant. La méthode inclut également une instruction pour créer un nouvel attribut à l'élément courant ainsi qu'une instruction pour fermer l'élément courant ce qui consiste à réassigner le rôle d'élément courant à l'élément parent de l'élément courant. La méthode inclut une définition de fichier permettant de construire le nom du document XML, de créer un élément racine lequel devient l'élément courant et de spécifier lequel des gabarits est le gabarit racine. Des paramètres servent à lier les gabarits quand l'instruction d'appel gabarit est exécutée ou lorsque la définition de fichier est ouverte et qu'il est fait appel au gabarit racine. Chacune des instructions des gabarits est appliquée à chaque enregistrement des jeux d'enregistrement. Les instructions sont interprétées par le générateur XML. La base de données source est une base de données relationnelle et les requêtes sont des requêtes qui obéissent aux règles du langage de requêtes structuré dit SQL. Les gabarits, les requêtes, les instructions, la définition de fichier et les paramètres sont contenus sous forme de tables dans au moins une base de données relationnelle et peuvent être incluses dans la base de données source.

### BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La FIGURE 1 illustre le mode global de mise en oeuvre de l'invention.
La FIGURE 2 décrit la structure des tables de définition du générateur XML.
La FIGURE 3 décrit le processus qui traite de la génération des fichiers sur la base du contenu de la définition de fichier.
La FIGURE 4 décrit l'étape de création du fichier cible XML.
La FIGURE 5 décrit le traitement d'un gabarit.
La FIGURE 6 décrit les instructions des gabarits.
La FIGURE 7 est un exemple de mise en oeuvre de l'invention.

Les dessins joints sont donnés à titre d'exemples et ne sont pas limitatifs de l'invention.

### DESCRIPTION DÉTAILLÉE DE L'INVENTION

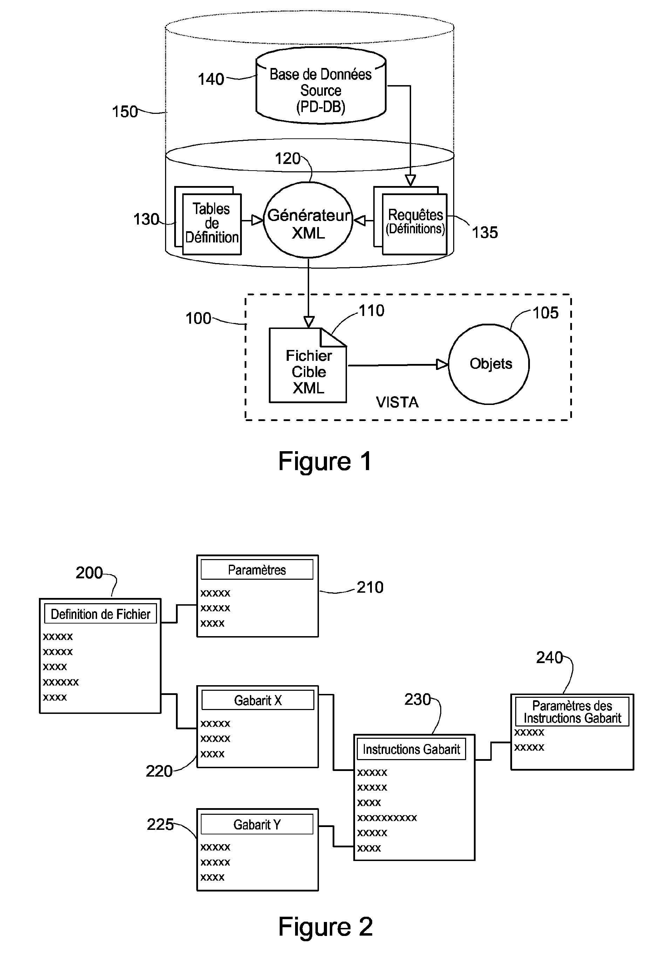

La **figure 1** illustre le mode global de mise en oeuvre de l'invention qui sert à une application logicielle ci-après dénommée VISTA (100) dont le but est de mettre à disposition d'utilisateurs distants des informations extraites d'une base de données source (140) en les formatant automatiquement dans une forme susceptible d'être interprétée sans difficulté par les navigateurs de ces derniers. La base de données contiendra par exemple les offres et l'état des réservations des chaînes hôtelières internationales. Les utilisateurs sont alors, dans cet exemple, les agences de voyage qui peuvent ainsi accéder à ces informations de n'importe où dans le monde depuis un réseau public ou privé à travers Internet.

Comme discuté dans le chapitre sur l'état de l'art, le langage XML est le plus approprié. Proposé par l'organisme principal de normalisation du Web, c'est-à-dire le W3C, de l'anglais « World-Wide Web Consortium », il a été très largement adopté. Ainsi VISTA se fonde sur la génération de documents sous la forme de fichiers XML (110) pour afficher leur contenu et ainsi mettre à disposition des utilisateurs les informations recherchées. À cette fin l'application (100) doit lire les fichiers XML par l'intermédiaire d'un analyseur syntaxique (dénommé « parser » en anglais). L'analyseur syntaxique est un outil standard développé et vendu par des fournisseurs de logiciels tels que la société américaine bien connue « Microsoft Corporation ». L'analyse des fichiers cible produit, lors de l'exécution de l'analyseur syntaxique, des objets (105) constituant les pages affichables par le navigateur de l'utilisateur de l'application.

Le générateur XML (120), chargé de produire les fichiers XML, se base sur des modèles ou gabarits (« templates » dans la littérature technique en langue anglaise sur ces sujets). Ils sont mémorisés dans les tables de définition (130) du générateur XML au format et dans le langage de la base de données relationnelle utilisée. Les gabarits ont vocation à être imbriqués pour élargir leur possibilité d'être réutilisé. Les gabarits selon l'invention sont des jeux d'instructions interprétables par le générateur XML et réutilisables dans leur contexte. Le contexte d'un gabarit s'applique à un jeu d'enregistrements (« set of records » or « recordset » selon la terminologie technique en langue anglaise), c'est-à-dire à une vue partielle de la base de données, obtenue à l'aide d'une requête spécifique émise en direction de cette dernière. Les requêtes sont conformes au langage structuré de requêtes SQL précédemment discuté. Dans le cadre de l'invention les requêtes sont définies et mémorisées dans la base de données (135) sous la forme d'objets qui donnent chacun accès à un jeu particulier d'enregistrements. Les objets requête peuvent contenir des paramètres. Les paramètres servent alors à modifier la requête. Par exemple, dans une base de données qui répertorierait tous les livres d'une bibliothèque, une requête peut être définie qui permet de rechercher les livres par auteur et inclut donc un paramètre « auteur ». Pour une recherche spécifique le paramètre auteur peut alors être remplacé par le nom d'un auteur particulier. Le jeu d'enregistrements correspondant, qui sera renvoyé par la base de données, en réponse à la requête, sera constitué de la liste des livres de cet auteur que la bibliothèque possède.

Si XML est le moyen le plus approprié pour distribuer les données aux utilisateurs, une base de données relationnelle (140) est bien adaptée pour stocker les données propres au produit. L'utilisation d'une base de données bien structurée garantit une maintenance aisée et efficace des informations qu'elle contient et évite notamment les redondances. La base de données (140) est alors la source essentielle des données qui seront incluses dans les fichiers XML générés à destination des utilisateurs de l'application (100). La méthode de l'invention tire parti notamment de l'utilisation du langage structuré de requêtes SQL déjà mentionné. L'utilisation de gabarits, au format de la base de données, qui permet de générer les documents XML cible, ne requiert pas d'avoir à distribuer aux utilisateurs, au moment où ils se connectent avec leur navigateur, les moyens logiciels qui leurs seraient autrement nécessaires pour accéder directement à la base de données source. Ceci ne manquerait pas de pénaliser les temps d'accès à l'information recherchée, encombrerait le réseau et compliquerait beaucoup la mise à disposition de l'information recherchée. En effet, si la structure et l'organisation de la base de données tendent à garantir son efficacité et évitent les redondances, l'affichage des informations à destination de l'utilisateur répond à d'autres critères. L'adaptation entre la structure des données dans la base de données et les données requises par l'utilisateur est d'autant mieux obtenue qu'elle est réalisée à la source, comme le préconise l'invention, par le générateur XML (120) qui s'appuie sur les gabarits des tables de définition (110) et les définitions de requêtes associées (135) pour créer un nombre réduit de fichiers cible XML (110) contenant les informations suffisantes à destination de l'utilisateur.

Les tables de définition, les gabarits et les requêtes selon l'invention peuvent être contenues dans une base de données séparée de la base de donnée source (140), comme schématisé sur la figure 1, mais pourraient tout aussi bien faire partie d'une base de données unique (150) sans inconvénient.

Le but de l'invention est donc de produire des documents XML (110) à partir d'une seule source (140), une base de données relationnelle, gérée par des applications logicielles qui constituent des standards de fait et dont il existe de nombreuses variantes commerciales bien connues, par exemple, celles portant le nom de « Oracle », « IBM DB2 » ou « Microsoft Access », produits développés et commercialisés par leurs firmes respectives. La gestion et l'intégrité des données elles-mêmes sont donc assurées par l'utilisation d'un produit standard qui a été largement testé et utilisé. Ainsi, en incluant les règles de génération et de test des documents XML dans la base de donnée elle-même, dans le format de cette dernière, de nombreux avantages en découlent. En particulier le temps de développement est réduit. Faire des changements dans la base de données et régénérer automatiquement tous les fichiers XML d'une application donnée, comme VISTA (100), est alors beaucoup plus court que d'avoir à mettre à jour et à corriger un code spécifique. De plus, ceci peut être réalisé directement par les professionnels chargés du développent de l'application elle-même, VISTA dans cet exemple, alors que le développement d'un logiciel spécifique demande toujours un coûteux effort de codage par des programmeurs hautement spécialisés.

La **figure 2** décrit la structure des « tables de définition » du générateur XML. Chaque table comprend :

| | |
|---|---|
| Définition de Fichier (200) | Une définition de fichier est nécessaire pour créer le fichier XML cible. La définition de fichier comprend les informations suivantes : - le nom du fichier XML à créer - le gabarit racine à appeler - la requête associée pour retrouver le jeu d'enregistrements approprié de la base de données - l'élément racine à créer (optionnel) - les paramètres (comme définis ci-après) |
| Gabarit (220) | Un gabarit contient des instructions exécutables comme définies ci-après. Un gabarit peut appeler un autre gabarit (225). |
| Instructions (230) | Les instructions d'exécution d'un gabarit sont de plusieurs types qui servent à : - créer un élément XML - créer un attribut XML - fermer un élément XML - appeler un gabarit (des paramètres peuvent être spécifiés) |
| Paramètres (210, 240) | Les paramètres agissent comme des liens entre le jeu d'enregistrements du gabarit appelant et celui du gabarit appelé et il faut faire la distinction entre : |
| | Définition de paramètre : Les paramètres mémorisés au niveau des gabarits (240) et de la définition de fichier (210). La définition comprend un nom et un nom de champ du jeu d'enregistrement courant qui contiendra la valeur du paramètre du groupe de paramètres ci-après. |
| | Groupe de paramètres : Un groupe temporaire de paramètres du jeu d'enregistrements provenant de la base de données. |
| | Paramètres de requêtes : Afin de retrouver le jeu d'enregistrements approprié dans la base de données. |

La définition de fichier (200), qui fait appel à des paramètres (210), contient la définition de la requête particulière à appliquer à la base de données pour retrouver le jeu d'enregistrements approprié. La définition de fichier référence un gabarit (220) qui fait appel à des instructions (230). Quand l'instruction est du type qui appelle un autre gabarit (225) des paramètres doivent alors être passés au gabarit appelé (240).

Les éléments et attributs du document XML, mentionnés dans le tableau ci-dessus, font partie intégrante du langage XML et sont des notions bien connues des spécialistes de ces domaines. D'une façon générale un document XML comprendra un ou plusieurs éléments délimités par des balises de début et de fin, respectivement de la forme <xxxElement> et </Element>. Chaque élément peut alors avoir un ou des attributs ayant chacun un nom et une valeur qui sont spécifiés par les instructions du gabarit.

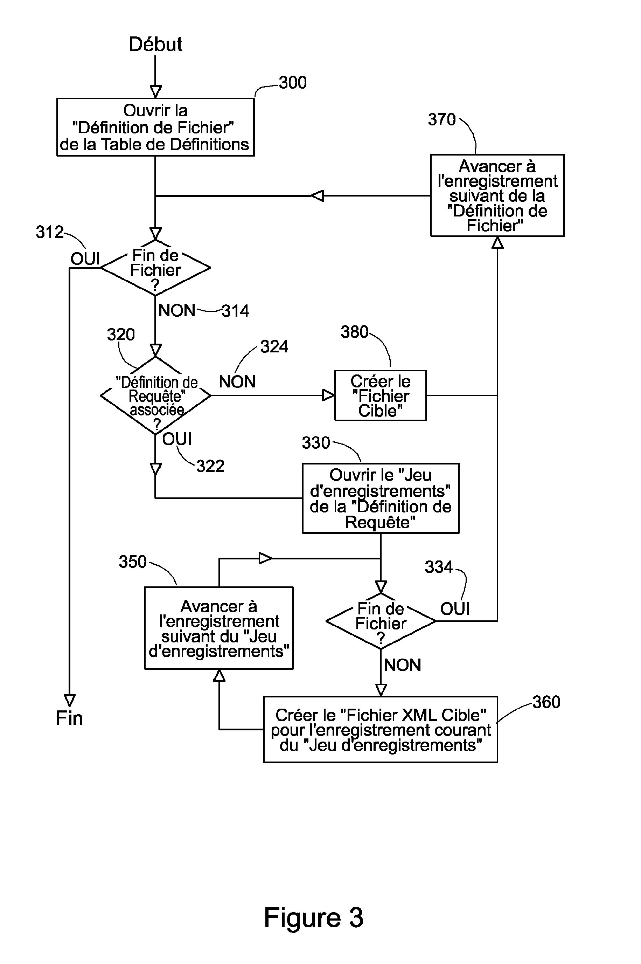

La **figure 3** décrit le processus qui traite de la génération des fichiers sur la base du contenu de la « définition de fichier » décrite précédemment et faisant partie d'une « table de définitions du générateur XML ».

Après ouverture de la définition de fichier (300) pour chaque enregistrement (314) de cette définition on teste (320) s'il existe une « définition de requête » associée. Si c'est le cas (322), la requête correspondante est exécutée. Le « jeu d'enregistrements » obtenu de la base de donnée est alors ouvert (330). Il y aura autant de fichiers cible créés (360) qu'il y a d'enregistrements dans le jeu d'enregistrement. Tous les enregistrements de la du jeu sont parcourus (350). Quand le dernier a été traité (334) on passe à l'enregistrement suivant de la définition de fichier (370).

Si, lorsque l'on teste la présence d'une définition de requête associée (320), la réponse est négative (324), un seul fichier cible est alors créé (380) avant de passer à l'enregistrement suivant de la définition de fichier. S'il n'y a plus d'enregistrement le processus est terminé (312).

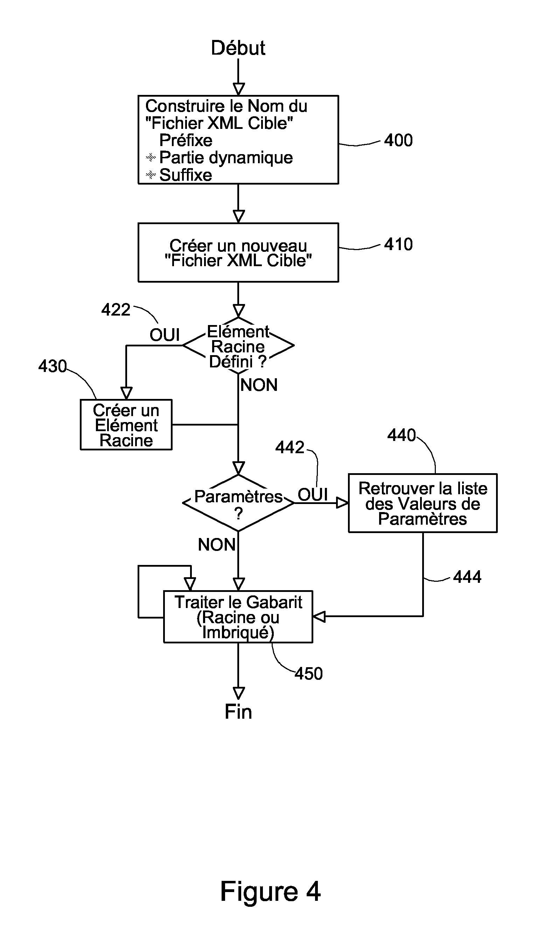

L'étape de création du « fichier cible » (380) et celles, similaires, de création du « fichier XML cible » (360) est décrite dans la **figure 4.**

La création du fichier cible implique d'abord de construire (400) un nom de fichier. Si, comme on l'a vu précédemment, une même « définition de fichier » est utilisée pour créer de multiples fichiers cible, la construction du nom résulte de la concaténation :
- d'un préfixe provenant de la définition de fichier
- d'une partie dynamique provenant de l'enregistrement courant du jeu d'enregistrements.
- d'un suffixe provenant de la définition de fichier
Cependant, s'il n'y a pas de définition de requête associée, comme on vient de le voir, un seul fichier doit être créé. Dans ce cas seuls le préfixe et le suffixe sont utilisés, il n'y a pas de partie dynamique.

Après quoi le fichier XML cible est effectivement créé (410) sous la forme d'un objet représentant la structure du document XML et conforme à la spécification DOM, de l'anglais « Document Object Model » émise par l'organisme de normalisation du Web, c'est-à-dire le W3C, déjà mentionné.

Si un élément racine apparaît dans la définition de fichier (422) celui-ci est créé. (430). Après quoi, s'il y a des paramètres présents dans la définition de fichier (442) ceux-ci sont retrouvés (440) pour être passés au gabarit (444).

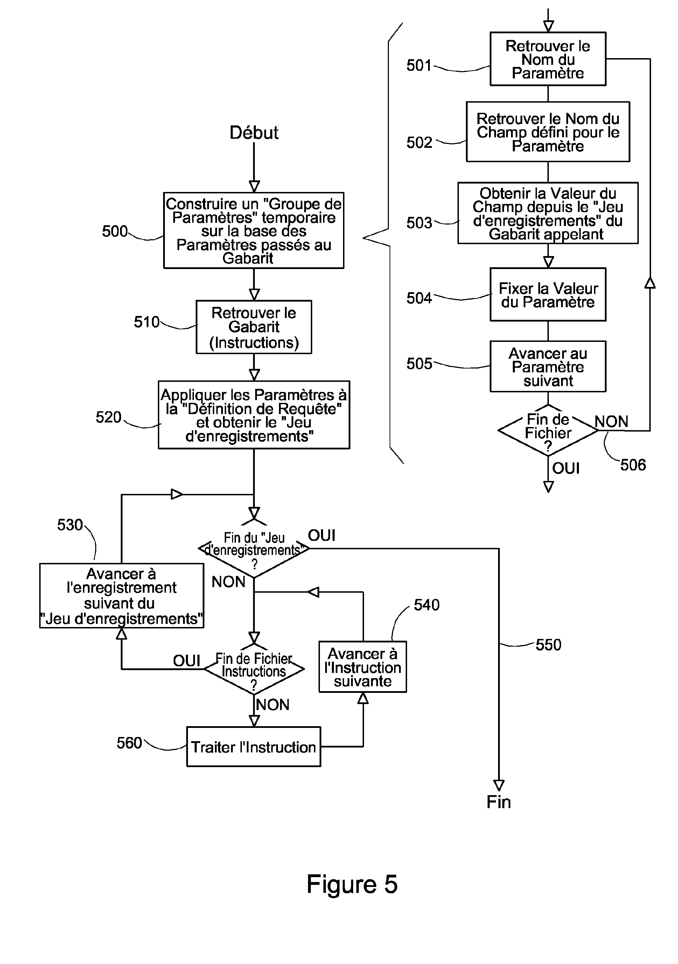

Le traitement du gabarit (450), qui peut être un gabarit racine ou un gabarit imbriqué, c'est-à-dire appelé par un autre gabarit, est décrit plus précisément dans la **figure 5.**

Les paramètres définis par le gabarit appelant (ou la définition de fichier) doivent être appairés à ceux du gabarit que l'on appelle. A cette fin un « groupe de paramètres » temporaire est construit (500) sur la base de la définition des paramètres. Quand ceci est fait, les valeurs appropriées sont obtenues depuis l'enregistrement courant du « jeu d'enregistrements ».

L'étape (500) est décomposée précisément dans la partie droite de la figure 5. Chacun des paramètres est retrouvé par son nom (501) ainsi que champ défini par le paramètre (502). La valeur du champ est obtenue depuis le « jeu d'enregistrements » (503) ce qui permet de fixer la valeur du paramètre (504). Le processus se répète (506) tant qu'il y a des paramètres (505) à traiter.

Ensuite le gabarit appelé est retrouvé (510). Les paramètres de la « définition de requête » associée doivent être appairés à ceux du gabarit appelant avant exécution sur la base de données afin d'obtenir le « jeu d'enregistrements » approprié (520). L'application des paramètres se fait exhaustivement sur chacun des enregistrements du « jeu d'enregistrements » (530) et pour chacune des instructions (540) jusqu'à ce qu'il n'y ait plus d'instructions à traiter (560) ni d'enregistrement dans le « jeu d'enregistrements » (550).

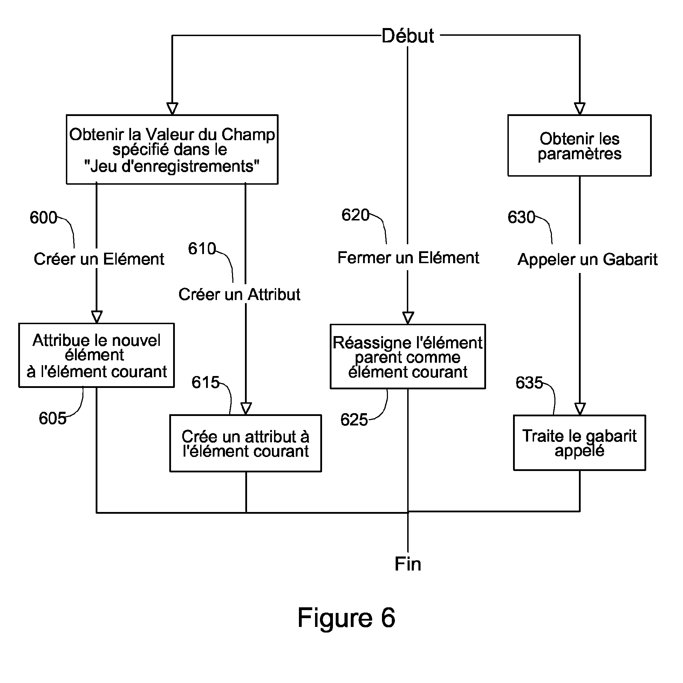

La **figure 6** décrit plus précisément l'étape de traitement des instructions. Quand les instructions sont exécutées le système maintient une notion d'élément courant. C'est cet élément qui est la cible de chacune des instructions décrite ci-après. A défaut d'élément courant c'est la racine ou le premier élément du gabarit qui est utilisé.

Les instructions sont de plusieurs types : création d'un élément (600), création d'un attribut (610), fermeture d'un élément (620) et appel d'un gabarit (630). Dans les deux premiers cas il faut préalablement obtenir (602) la valeur du champ spécifié dans le « jeu d'enregistrements » courant. Dans le dernier cas il faut obtenir d'abord (632) les paramètres à passer au gabarit appelé.

Une instruction peut donc avoir à créer un élément XML (600) portant le nom construit comme décrit précédemment. Le nouvel élément est alors attribué à l'élément courant (605) qui devient ainsi le parent du nouvel élément enfant. Optionnellement, une valeur peut être insérée dans le nouvel élément, valeur qui doit correspondre au champ spécifié du « jeu d'enregistrements ».

Une instruction peut avoir à assigner un attribut (610) à un élément XML. L'attribut est créé pour l'élément courant (615). Comme ci-dessus, optionnellement, une valeur peut être fixée à cet attribut, valeur qui doit correspondre à un champ spécifique du jeu d'enregistrement.

Une instruction peut fermer un élément (620) ce qui revient à réassigner à l'élément parent le rôle d'élément courant (625).

Enfin, une instruction peut appeler un gabarit (630) du nom spécifié précédemment Pour le traitement du gabarit appelé (635) des paramètres seront passés depuis le jeu d'enregistrements du gabarit courant vers celui du gabarit appelé.

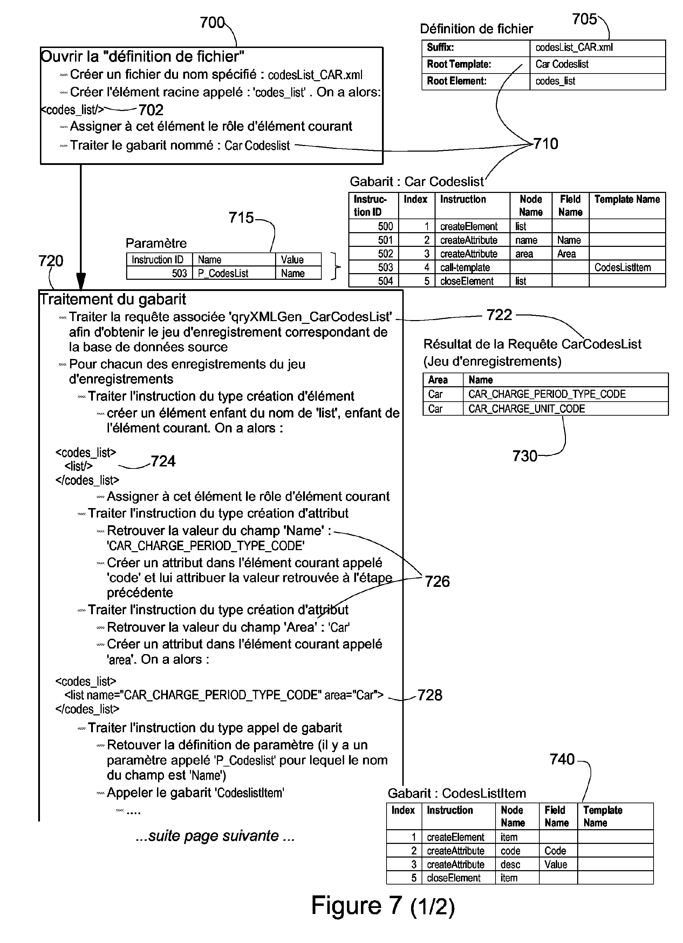

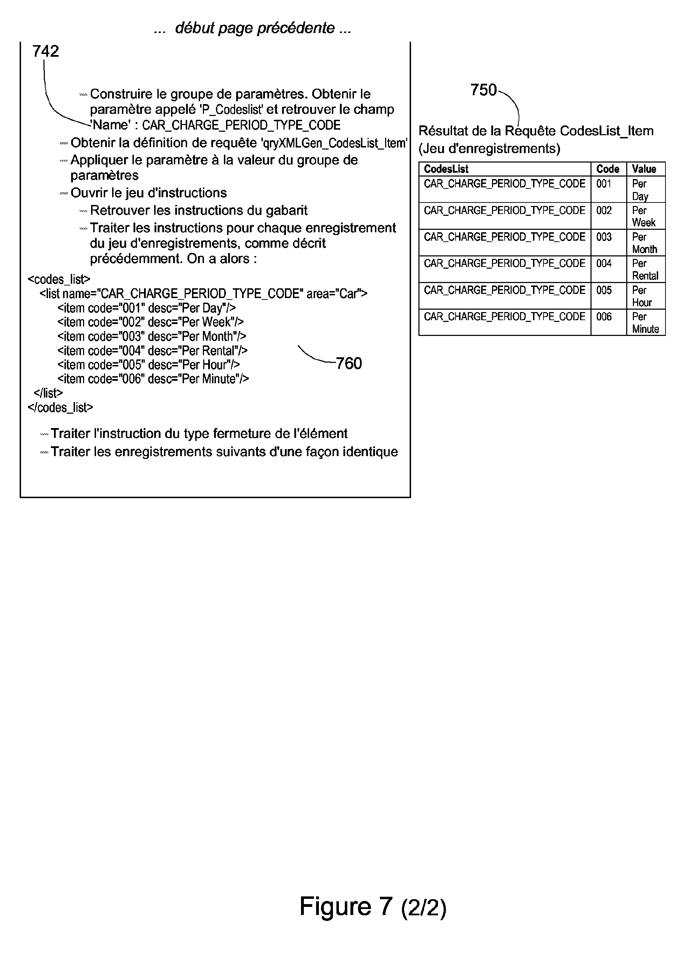

La **figure 7** illustre, à travers un exemple particulier, la méthode selon l'invention pour générer un fichier cible XML à partir d'une base de données relationnelle. Dans cet exemple, comme c'est presque exclusivement toujours le cas dans un environnement de développement de produits logiciels qui ont vocation à être commercialisés dans le monde entier par des équipes multinationales, tous les termes techniques du code sont définis en langue anglaise. Ceci ne saurait cependant nuire à la bonne compréhension de la description qui suit. Soit, quand c'est nécessaire, les termes sont explicités ou alors ils peuvent être sans inconvénient considérés comme une suite de lettres et de nombres, sans signification particulière, quand bien même, pour des raisons mnémotechniques et pratiques évidentes, on essaye effectivement de leur en conférer une.

La création d'un fichier XML commence avec l'ouverture (700) de la « définition de fichier », déjà décrite, qui prend la forme d'une table (705) dans la base de données. Avec les informations contenues dans cette table on peut alors créer un fichier XML, du nom spécifié (codesList_CAR.xml), contenant un premier élément vide (codes_list). Cet élément devient l'élément courant. La définition de fichiers contient le nom du gabarit racine (710) auquel il est fait appel.

Le gabarit ci-dessus est alors traité (720). La première étape consiste à exécuter la requête (722) définie pour le gabarit (CarCodesList), sur la base de données, afin d'obtenir le jeu d'enregistrements correspondant (730). Pour chacun des enregistrements du jeu d'enregistrements ainsi obtenu on applique les instructions du gabarit (710), au nombre de 5 dans cet exemple.

Ceci commence par la création (724) d'un élément enfant (list) de l'élément courant créé précédemment. Cet élément devient à son tour l'élément courant. Les deux instructions suivantes, d'indexes 2 et 3, du gabarit (710) sont traitées à leur tour. Elles servent à créer (726) deux attributs (Name, Area), chacun correspondant a un nom de champ (Field Name) spécifié dans le gabarit. L'élément courant (list), du fichier XML (728) inclut alors ces attributs.

L'instruction suivante, index 4 du gabarit (710), fait appel à un autre gabarit (CodesListltem) pour lequel un paramètre est défini (715). Le gabarit appelé (740) a aussi une définition de requêtes (CodesListltem) qui permet d'obtenir le jeu d'enregistrements correspondant (750) dans la base de données après que le paramètre du gabarit appelant (715) ait permis de retrouver le champ (742) pour pouvoir exécuter effectivement cette requête.

Le traitement du gabarit appelé se fait d'une façon similaire à ce qui a déjà été décrit ci-dessus pour enrichir le fichier XML (760).

## Revendications

1. Une méthode pour générer automatiquement (120) au moins un document XML (110) incluant des données extraites d'une base de données source (140), la dite méthode consistant à :
définir une pluralité de gabarits dans le format (130) de la dite base de données, les dits gabarits (220, 225) incluant des instructions exécutables (230) ;
définir des requêtes (135) associées à chacun des dits gabarits, les dites requêtes utilisées pour extraire des données de la dite base de données source sous la forme de jeux d'enregistrements (730) ;
exécuter les dites instructions des dits gabarits afin de générer le dit au moins un document XML incluant les dites données provenant des dits jeux d'enregistrements.

2. La méthode selon la revendication 1 dans laquelle les dites instructions incluent au moins une instruction d'appel (630) à n'importe lequel des gabarits de la dite pluralité de gabarits.

3. La méthode selon la revendication 1 dans laquelle les dits documents XML sont composés d'éléments (702), lesquels éléments comprennent des attributs, la dite méthode **caractérisée en ce qu'**elle maintient une notion d'élément courant.

4. La méthode selon l'une quelconque des revendications précédentes incluant au moins :
une instruction pour créer un nouvel élément (600), la dite instruction dans laquelle le dit nouvel élément est attribué au dit élément courant et dans laquelle le dit nouvel élément devient à son tour le dit élément courant ;
une instruction pour créer un nouvel attribut (610), la dite instruction dans laquelle le dit nouvel attribut est créé pour le dit élément courant ;
une instruction pour fermer (620) le dit élément courant, la dite instruction consistant à réassigner le rôle d'élément courant à l'élément parent du dit élément courant.

5. La méthode selon l'une quelconque des revendications ci-dessus incluant une définition de fichier (200) permettant de :
construire le nom du dit document XML (400) ;
créer un élément racine (430) lequel élément racine devient l'élément courant ;
spécifier lequel des dits gabarits est le gabarit racine (710).

6. La méthode selon l'une quelconque des revendications ci-dessus incluant des paramètres (210, 240), les dits paramètres servant à lier les dits gabarits quand la dite instruction d'appel gabarit est exécutée ou lorsque la dite définition de fichier est ouverte et qu'il est fait appel au dit gabarit racine.

7. La méthode selon l'une quelconque des revendications ci-dessus dans laquelle chacune des dites instructions (540) des dits gabarits est appliquée à chaque enregistrement (530) des dits jeux d'enregistrement.

8. La méthode selon la revendication 7 dans laquelle les dites instructions sont interprétées par le générateur XML (120).

9. La méthode selon l'une quelconque des revendications ci-dessus dans laquelle la dite base de données source (140) est une base de données relationnelle et les dites requêtes (135) sont des requêtes obéissant aux règles du langage de requêtes structuré dit SQL.

10. La méthode selon l'une quelconque des revendications ci-dessus dans laquelle les dits gabarits, les dites requêtes, les dites instructions, la dite définition de fichier et les dits paramètres sont contenus sous forme de tables dans au moins une base de données relationnelle.

11. La méthode selon la revendication 10 dans laquelle les dites tables sont incluses dans la dite base de données source (150).

12. Un système, notamment un générateur de documents XML (120), le dit système comprenant des moyens adaptés pour mettre en oeuvre la méthode décrite dans l'une quelconque des revendications précédentes.

13. Un support lisible par ordinateur comprenant les instructions d'un programme exécutable par le dit ordinateur, le dit programme mettant en oeuvre la méthode selon l'une quelconque des revendications 1 à 11.
